# EUROPEAN PATENT SPECIFICATION

(11) **EP 4 156 761 B1**
(45) Date of publication and mention of the grant of the patent: **06.11.2024**
(21) Application number: 20948846.9
(22) Date of filing: 06.08.2020
(51) Int. Cl.: H04W 24/10, H04W 36/00

(54) **METHODS FOR NEIGHBORING CELL MEASUREMENT, TERMINAL DEVICE AND NETWORK DEVICE**
VERFAHREN ZUR NACHBARZELLENMESSUNG, ENDGERÄTEVORRICHTUNG UND NETZWERKVORRICHTUNG
PROCÉDÉS DE MESURE DE CELLULE VOISINE, DISPOSITIF TERMINAL ET DISPOSITIF RÉSEAU

(43) Date of publication of application: 29.03.2023
(73) Proprietor: GUANGDONG OPPO MOBILE TELECOMMUNICATIONS CORP., LTD., Dongguan, Guangdong 523860 (CN)
(72) Inventor: LI, Haitao, Dongguan, Guangdong 523860 (CN); HU, Yi, Dongguan, Guangdong 523860 (CN)
(74) Representative: Manitz Finsterwald Patent- und Rechtsanwaltspartnerschaft mbB
(86) International application number: PCT/CN2020/107531
(87) International publication number: WO 2022/027489

(56) References cited:
- WO-A1-2014/161178
- WO-A1-2020/015563
- WO-A1-2020/082211
- WO-A1-2020/092732
- WO-A1-2021/081997
- WO-A2-2022/006185
- CN-A- 108 882 264
- CN-A- 109 788 496
- CN-A- 111 247 852
- US-A1- 2022 248 282
- US-B1- 10 117 139
- "3rd Generation Partnership Project; Technical Specification Group Radio Access Network; NR; Radio Resource Control (RRC) protocol specification (Release 16)", 24 July 2020 (2020-07-24), XP052353422, Retrieved from the Internet <URL:https://ftp.3gpp.org/tsg_ran/WG2_RL2/Specifications/202007_final_specs_after_RAN_88/38331-g10.zip 38331-g10.docx> [retrieved on 20200724]
- "3rd Generation Partnership Project; Technical Specification Group Radio Access Network; Solutions for NR to support non-terrestrial networks (NTN) (Release 16)", 10 December 2019 (2019-12-10), XP051838792, Retrieved from the Internet <URL:https://ftp.3gpp.org/Meetings_3GPP_SYNC/RAN/Docs/RP-193062.zip 38821-110.doc> [retrieved on 20191210]
- CATT: "Measurement Issues for NTN System", vol. RAN WG2, no. Chongqing, P.R.China; 20191014 - 20191018, 3 October 2019 (2019-10-03), XP051803772, Retrieved from the Internet <URL:https://ftp.3gpp.org/tsg_ran/WG2_RL2/TSGR2_107bis/Docs/R2-1912157.zip R2-1912157 Measurement Issues for NTN System.docx> [retrieved on 20191003]
- THALES: "Solutions for NR to support non-terrestrial networks (NTN)", vol. TSG RAN, no. e-meeting; 20200629 - 20200703, 30 June 2020 (2020-06-30), XP051910199, Retrieved from the Internet <URL:https://ftp.3gpp.org/tsg_ran/TSG_RAN/TSGR_88e/Docs/RP-201256.zip RP-201256_WID NR-NTN_for Rel-17 v4.3.doc> [retrieved on 20200630]

## Description

### TECHNICAL FIELD

Embodiments of the application relate to the field of communication, and in particular, to methods for neighboring cell measurement, a terminal device, a network device and a storage medium.

### BACKGROUND

Measurement mainly refers to mobility measurement in a connected state. After a network device issues a measurement configuration to a terminal device, the terminal device detects a signal quality state of a neighboring cell according to the parameters, such as Measurement Object (MO) and Reporting Configuration that are indicated in a measurement configuration, and feeds back measurement report information to a network for the network to handover or improve a neighboring cell relationship list. The measurement configuration may include a measurement gap configuration and a Synchronization Signal/Physical Broadcast Channel (SS/PBCH) Block Measurement Timing Configuration (SMTC) configuration. The measurement gap configuration is used for indicating a time when the terminal device performs inter-frequency/inter-system measurement. The SMTC configuration is used for indicating a time when the terminal device receives a measurement reference signal on a neighboring cell corresponding to a measurement frequency point.

For a traditional terrestrial cellular system, the coverage radius of a cell is small, and the difference between a signal transmission delay between the terminal device and a base station of a serving cell and a signal transmission delay between the terminal device and a base station of a neighboring cell is very small. The maximum configurable value of the duration of the SMTC is 5ms, and the maximum configurable value of the duration of the measurement gap is 6ms.

In a New Radio (NR) system, it is considered to adopt a satellite communication manner to provide communication services for users. Due to the large coverage of satellites, there is also a great difference among the signal transmission delays between the terminal device and different satellites. In this case, how to perform neighboring cell measurement is an urgent problem to be solved. WO 2020/092732 A1 discloses techniques for performing radio resource management (RRM) measurements when user equipment (UE) is in a radio resource control (RRC) idle state in a 5G NR network. The document entitled "3rd Generation Partnership Project; Technical Specification Group Radio Access Network; NR; Radio Resource Control (RRC) protocol specification (Release 16)", 3GPP DRAFT; 38331-G10, XP052353422, specifies the RRC for the radio interface between UE and NG-RAN.

### SUMMARY

The invention is set out in the appended set of claims. The claimed invention provides methods for neighboring cell measurement, a terminal device and a network device, which can shorten the continuous occupation duration of the data transmission time of a serving cell by the neighboring cell measurement, and is beneficial to improving the user experience.

Based on the abovementioned technical solutions, the network device may configure at least two sets of measurement gap configurations for the terminal device. The two sets of measurement gap configurations can be applied to neighboring cell measurement within different signal transmission delay ranges, so that a measurement gap covers a neighboring cell with a great transmission delay difference without prolonging the duration of the measurement gap, which reduces the continuous occupation duration of the data transmission time of a serving cell by the neighboring cell measurement, and is beneficial to improving the user experience.

### BRIEF DESCRIPTION OF THE DRAWINGS

FIG. 1 illustrates a schematic diagram of a communication system architecture not being part of the invention.
FIG. 2 illustrates a schematic flowchart of a method for neighboring cell measurement provided by an embodiment of the present application.
FIG. 3 illustrates a schematic flowchart of a method for neighboring cell measurement not being part of the invention.
FIG. 4 illustrates a schematic flowchart of a method for neighboring cell measurement provided by yet another embodiment of the present application.
FIG. 5 illustrates a schematic flowchart of a method for neighboring cell measurement not being part of the invention.
FIG. 6 illustrates a schematic block diagram of a terminal device not being part of the invention.
FIG. 7 illustrates a schematic block diagram of another terminal device not being part of the invention.
FIG. 8 illustrates a schematic block diagram of a network device not being part of the invention.
FIG. 9 illustrates a schematic block diagram of another network device not being part of the invention.
FIG. 10 illustrates a schematic block diagram of a communication device provided by an embodiment of the present application.
FIG. 11 illustrates a schematic block diagram of a chip not being part of the invention.

### DETAILED DESCRIPTION

The technical solutions in the embodiments of the application are described below with reference to the accompanying drawings in the embodiments of the present application.

The embodiments of the present application may be applied to various communications systems, such as a Global System for Mobile Communications (GSM), a Code Division Multiple Access (CDMA) system, a Wideband Code Division Multiple Access (WCDMA) system, a General Packet Radio Service (GPRS) system, a Long Term Evolution (LTE) system, an Advanced Long Term Evolution (LTE-A) system, a New Radio (NR) system, an evolution system of the NR system, an LTE-based access to unlicensed spectrum (LTE-U) system, an NR-based access to unlicensed spectrum (NR-U) system, a Universal Mobile Telecommunication System (UMTS), a Wireless Local Area Network (WLAN), a Wireless Fidelity (WiFi) system, a next generation system, or other communication systems.

Generally speaking, traditional communication systems support a limited number of connections and are easy to implement. However, with the development of the communication technology, mobile communication systems will not only support traditional communication, but also support, for example, Device to Device (D2D) communication, Machine to Machine (M2M) communication, Machine Type Communication (MTC), and Vehicle to Vehicle (V2V) communication, etc. The embodiments of the present application can also be applied to these communication systems.

Optionally, the communication system in the embodiments of the present application may be applied to a Carrier Aggregation (CA) scenario, or may also be applied to a Dual Connectivity (DC) scenario, or may also be applied to a Standalone (SA) networking scenario.

No limits are made to the spectrum used in the embodiments of the present application. For example, the embodiments of the present application may be applied to a licensed spectrum, an unlicensed spectrum, or a shared spectrum.

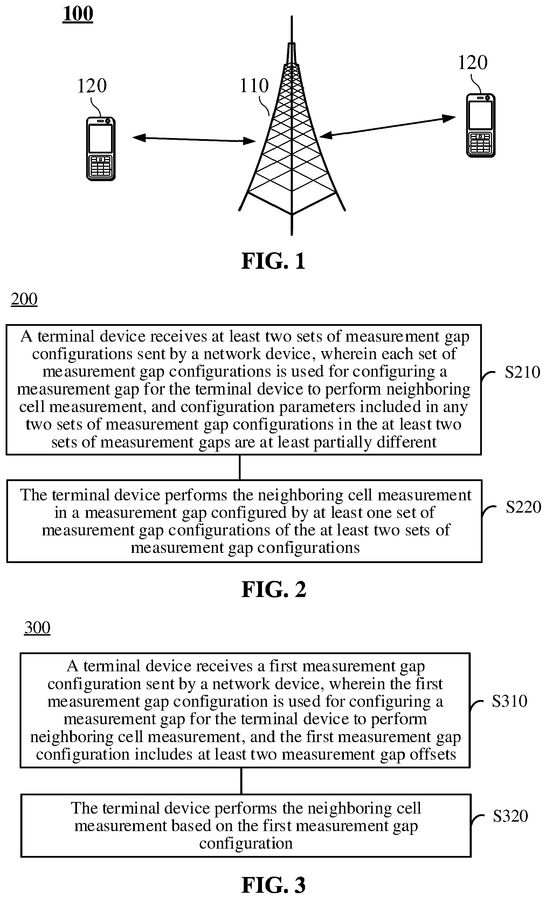

Exemplarily, FIG. 1 shows a communication system 100 applied to the invention. The communication system 100 may include a network device 110. The network device 110 may be a device in communication with a terminal device 120 (or called a communication terminal or a terminal). The network device 110 may provide communication coverage for a specific geographical area, and may communicate with the terminal device located within the coverage.

FIG. 1 exemplarily illustrates one network device and two terminal devices. Optionally, the communication system 100 may include a plurality of network devices and other number of terminal devices may be included in the coverage of each network device. No limits are made thereto in the embodiments of the present application.

Optionally, the communication system 100 may further include other network entities, such as a network controller and a mobile management entity. No limits are made thereto in the embodiments of the present application.

It is to be understood that a device with a communication function in a network/system in the embodiments of the present application may be called a communication device. Taking a communication system 100 as shown in FIG. 1 as an example, the communication device may include a network device 110 and terminal devices 120 with a communication function. The network device 110 and the terminal devices 120 may be specific devices as described above, which will not be elaborated herein. The communication device 100 may also include other devices, for example, other network entities, such as a network controller and a mobile management entity. No limits are made thereto in the embodiments of the present application.

It should be understood that the terms "system" and "network" herein are often used interchangeably herein. The term "and/or" herein is only an association relationship for describing associated objects and indicates that three relationships may exist. For example, A and/or B may indicate the following three cases: Only A exists, both A and B exist, and only B exists. In addition, the character "/" herein generally indicates that the contextual objects are in an "or" relationship.

It is to be understood that the "indication" mentioned in the embodiments of the application may be direct indication, or indirect indication, or indicate that there is an association relationship. For example, A indicating B may represent that A directly indicates B, for example, B may be acquired through A, or represent that A indirectly indicates B, for example, A indicates C, and B may be acquired through C, or represent that there is an association relationship between A and B.

In the description of the embodiments of the present application, the term "correspondence" can represent that there is a direct or indirect correspondence between the two, or that there is an association between them, or that there is a relationship between indication and being indicated, configuration and being configured, etc.

In the embodiments of the present application, various embodiments are described in combination with a terminal device and a network device. The terminal device may also be referred to as User Equipment (UE), an access terminal, a user unit, a user station, a mobile station, a mobile radio station, a remote station, a remote terminal, a mobile device, a user terminal, a terminal, a wireless communication device, a user agent, a user apparatus, or the like. The terminal device may be a STATION (ST) in the WLAN, may be a cellular phone, a cordless phone, a Session Initiation Protocol (SIP) phone, a Wireless Local Loop (WLL) station, a Personal Digital Assistant (PDA), a hand-held device having a wireless communication function, a computing device or other processing devices connected to a wireless modem, an on-board vehicle, a wearable device, a terminal device in the next generation communication system, such as a terminal device in an NR network, a terminal device in a Public Land Mobile Network (PLMN) in future evolution, or the like.

As an example rather than a limitation, in the embodiments of the present application, the terminal device may also be a wearable device. The wearable device, also referred to as a wearable intelligent device, is a generic term of wearable devices obtained by performing intelligent designing and development on daily wearing products, such as glasses, gloves, watches, clothes, and shoes, by applying a wearable technology. The wearable device is a portable device that is directly put on a human body or is integrated with clothes or ornaments of a user. The wearable device is not merely a hardware device, but further implements a powerful function through software support, data exchange, and cloud-based interaction. Generalized wearable intelligent devices include, for example, intelligent watches or intelligent glasses with complete functions and large sizes and capable of realizing all or part of functions independent of intelligent phones, and for example, various types of sign monitoring intelligent bands and intelligent j ewelries of which each is dedicated to application functions of a certain type and required to be matched with other devices such as intelligent phones for use.

The network device may be a device used for communicating with a mobile device. The network device may be an Access Point (AP) in WLAN, a Base Transceiver Station (BTS) in GSM or CDMA, or may be a NodeB (NB) in WCDMA, or may also be an Evolutional Node B (eNB or eNodeB) in LTE, or a relay station or an access point, or an on-board device, a wearable device, or a network device or a gNB in an NR network, or a network device in a PLMN network in future evolution, or the like.

In the embodiments of the present application, the network device may have mobility, for example, the network device may be a mobile device. Optionally, the network device may be a satellite or a balloon station in a Non Terrestrial Network (NTN). For example, the satellite may be a Low Earth Orbit (LEO) satellite, a Medium Earth Orbit (MEO) satellite, a Geosynchronous Earth Orbit (GEO) satellite, a High Elliptical Orbit (HEO) satellite, and the like. Optionally, the network device may also be a base station arranged on at the positions, such as land and water.

In the embodiments of the present application, the network device provides services for a cell, and the terminal device communicates with the network device through a transmission resource (for example, a frequency-domain resource or a spectrum resource) used by the cell. The cell may be a cell corresponding to the network device (for example, a base station). The cell may belong to a macro base station, or belong to a base station corresponding to a small cell. Here, the small cell may include: a Metro cell, a Micro cell, a Pico cell, a Femto cell, and the like. These small cells have the characteristics of small coverage and low transmission power, and are suitable for providing high-rate data transmission services.

Measurement mainly refers to mobility measurement in a connected state. After a network issues a measurement configuration to UE, the UE detects a signal quality state of a neighboring cell according to the parameters, such as a Measurement Object and Reporting Configuration, indicated in a measurement configuration, and feeds back measurement report information to the network for handover or improvement of a neighboring cell relationship list by the network device.

Before introducing the method for neighboring cell measurement of the embodiment of the present application, related technologies are introduced first.

### I. Measurement configuration

In an NR system, a network device may send measurement configuration information to a terminal device in a connected state through Radio Resource Control (RRC) signaling. The terminal device performs measurement according to the content of the measurement configuration information (for example, intra-frequency measurement, inter-frequency measurement, and inter-Radio Access Technologies (RAT) measurement), and then reports a measurement result to the network device. For example, the network device may perform configuration of measurement configuration by using RRC connection reconfiguration.

Optionally, the measurement configuration information includes following contents.

### 1. Measurement Object (MO)

For intra-frequency measurement and inter-frequency measurement, each MO indicates a time-frequency position to be measured and a sub-carrier interval of a reference signal.

A cell related to the MO, optionally, the network device may also configure a cell offset list, a blacklist cell list, and a whitelist cell list.

For inter-RAT measurement, each MO may correspond to a separate Evolved Universal Territorial Radio Access (E-UTRA) frequency point.

For a cell related to the E-UTRA frequency point, optionally, the network device may also configure a cell offset list, a blacklist cell list, and a whitelist cell list.

During event evaluation and measurement reporting, the terminal device does not perform any operation on the cells in the blacklist cell list. The terminal device performs the event evaluation and the measurement reporting on the cells in the whitelist cell list.

For each measurement point, the network device configures an SS/PBCH block measurement timing configuration (SMTC) for indicating the time when the terminal device receives a Synchronization Signal Block (SSB) on a neighboring cell corresponding to the measurement frequency point.

Optionally, the SMTC configuration includes an SMTC period, a starting time offset of the SMTC within a period, a duration of the SMTC, etc.

### 2. Reporting Configuration

Each MO corresponds to one or more reporting configurations.

Optionally, the reporting configuration, for example, may include the following content.

Reporting criteria: that is, a triggering condition in which the terminal device performs measurement reporting, for example, period triggered reporting or event triggered reporting.

A Reference Signal (SR) type: RS of the terminal device used for wave beam and cell measurement, for example, an SS/PBCH block or a Channel State Information Reference Signal (CSI-RS).

A reporting format: a measurement reporting amount (for example, Reference Signal Receiving Power (RSRP)) of the terminal device for each cell and each wave beam. Optionally, other related information may also be included, for example, the maximum number of cells reported by the terminal device and the maximum number of wave beams reported for each cell.

Measurement events may, for example, include the following events.

A1 event: the signal quality of a serving cell is higher than one threshold.

A2 event: the signal quality of a serving cell is lower than one threshold.

A3 event: the signal quality of a neighboring cell is one threshold higher than the signal quality of a Special Cell (SpCell).

A4 event: the signal quality of a neighboring cell is higher than one threshold.

A5 event: the signal quality of the SpCell is lower than threshold 1, and the signal quality of a neighboring cell is higher than threshold 2.

A6 event: the signal quality of a neighboring cell is one threshold higher than the signal quality of a SCell.

B1 event: the signal quality of an inter-RAT neighboring cell is higher than one threshold.

B2 event: the signal quality of a Primary Cell (PCell) is lower than threshold 3, and the signal quality of an inter-RAT neighboring cell is higher than threshold 4.

### 3. Measurement Identity

Measurement identity is a separate ID, and is used for associating the MO and the reporting configuration. When one MO is associated with a plurality of reporting configurations simultaneously, or one reporting configuration may also be associated with a plurality of MOs, it can be distinguished through the measurement identity.

### 4. Measurement Gap

The measurement gap is used for indicating time information that the terminal device performs inter-frequency/inter-RAT measurement. Specifically, the terminal device performs inter-frequency/inter-RAT measurement during a measurement gap.

The network device may configure a measurement gap configuration per UE for the terminal device or a measurement gap configuration per Frequency Range (FR). When the measurement gap configuration per FR is configured, the network device may configure measurement gap configurations respectively corresponding to FR1 and FR2. The FR1 and the FR2 represent different FRs.

Optionally, each measurement gap configuration may include at least one of the following:
a period of the measurement gap (mgrp);
a timing advance of the measurement gap (mgta);
a measurement gap offset (gapOffset): a starting time offset of a gap within one period;
a length of the measurement gap (for example, mgl): that is, a duration of each gap; and
a reference serving cell indicator (refServCellIndicator).

### II. Reporting configuration

Each MO corresponds to one or more reporting configurations.

Optionally, the reporting configuration, for example, may include the following content.

Reporting criteria: that is, a triggering condition in which the terminal device performs measurement reporting, for example, period triggered reporting or event triggered reporting. A triggering event may be several measurement events as described above.

In some embodiments, the measurement gap configuration is configured based on UE, and the SMTC is configured based on a frequency point.

For a traditional terrestrial cellular system, the coverage radius of a cell is small, and the difference between a signal transmission delay between the UE and a base station of a serving cell and a signal transmission delay between the UE and a base station of a neighboring cell is very small. The difference among signal transmission delays between the UE and base stations of different cells may be compensated by configuring the duration of the SMTC, which ensures that the UE receives SSBs of different cells during the duration of the SMTC. Meanwhile, the measurement of the UE on all inter-frequency/inter-RAT frequency points is ensured to be within the measurement gap period by configuring the duration of a measurement gap. In a related art, the maximum configurable value of the duration of the SMTC is 5ms, and the maximum configurable value of the duration of the measurement gap is 6ms.

Compared with a traditional cellular network, in an NTN, the signal transmission delay between UE and a satellite increases greatly. In addition, due to a very large coverage of satellites, there is also a great difference among the signal transmission delays between the UE and different satellites. If the measurement configuration method of the current terrestrial system is continued to be used in the NTN, SSBs from some cell base stations with great transmission delays may not be received, and the channel quality states of these cell base stations cannot be known, which affects the result of measurement reporting. Or, if the duration of a gap is prolonged to cover a neighboring cell with a great transmission delay difference within one period, then the serving cell cannot perform data transmission within this period of time, resulting in too long data interruption time and thus affecting the user experience.

FIG. 2 illustrates a schematic flowchart of a method 200 for neighboring cell measurement according to an embodiment of the present application. As shown in FIG. 2, the method 200 includes, but is not limited to, S210 and S220.

At S210, a terminal device receives at least two sets of measurement gap configurations sent by a network device. Each set of measurement gap configurations is used for configuring a measurement gap for the terminal device to perform neighboring cell measurement, and configuration parameters included in any two sets of measurement gap configurations in the at least two sets of measurement gaps are at least partially different.

At S220, the terminal device performs the neighboring cell measurement in a measurement gap configured by at least one set of measurement gap configurations of the at least two sets of measurement gap configurations.

Optionally, in an embodiment of the present application, the at least two sets of measurement gap configurations may be configured based on perUE, that is, each UE may be configured with respective at least two sets of measurement gap configurations.

Optionally, in some embodiments, the terminal device may be configured with at least two sets of measurement gap configurations through high-level signaling. For example, the high-level signaling may be RRC signaling.

The terminal device may perform neighboring cell measurement based on all or part measurement gap configurations of the at least two sets of measurement gap configurations configured by the network device. That is, an RS of a neighboring cell is measured to determine a measurement reporting amount.

Optionally, for example, the RS includes, but is not limited to, at least one of the following: an SSB, a CSI-RS, a Demodulation Reference Signal (DMRS), etc.

Optionally, the measurement reporting amount may be, for example, Reference Signal Receiving Power (RSRP), Reference Signal Receiving Quality (RSRQ), Signal to Interference plus Noise Ratio (SINR), etc.

In an embodiment of the present application, the network device may configure at least two sets of measurement gap configurations for the terminal device. In the invention, each set of measurement gap configurations includes at least one of the following parameters:
a period of the measurement gap (mgrp), a starting time offset of the measurement gap within one period (gapOffset), a duration of the measurement gap (mgl), a timing advance of the measurement gap (mgta), and a reference serving cell indicator (refServCellIndicator).

In an embodiment of the present application, the configuration parameters in the at least two sets of measurement gap configurations are partially or completely different, such as the gapOffsets are different, the mgls are different, or the mgrps are different.

In the invention, starting time offsets in the at least two sets of measurement gap configurations are different. Other configuration parameters except the starting time offsets in the at least two sets of measurement gap configurations are the same.

Optionally, in some embodiments, the operation that the terminal device performs the neighboring cell measurement in the measurement gap configured by at least one set of measurement gap configurations of the at least two sets of measurement gap configurations includes the following operations.

The terminal device performs the neighboring cell measurement in the measurement gap configured by all measurement gap configurations of the at least two sets of measurement gap configuration; or
the terminal device performs the neighboring cell measurement in the measurement gap configured by part measurement gap configurations of the at least two sets of measurement gap configurations.

Optionally, the part measurement gap configurations may be indicated by the network device, or may be determined independently by the terminal device. No limits are made thereto in the present application.

As an example, the terminal device may receive first signaling sent by a network device. The first signaling is used for activating or deactivating one or more measurement gap configurations of the at least two sets of measurement gap configurations.

Further, the terminal device performs the neighboring cell measurement according to the currently activated measurement gap configuration.

For example, the at least two sets of measurement gap configurations include a gap configuration 1, a gap configuration 2, and a gap configuration 3. The network device instructs to activate the gap configuration 1 and the gap configuration 2, and then the terminal device may perform neighboring cell measurement based on the gap configuration 1 and the gap configuration 2. For another example, the network device instructs to deactivate the gap configuration 3, then other gap configurations, i.e., the gap configuration 1 and the gap configuration 2, are activated gap configurations, and then the terminal device may perform the neighboring cell measurement based on the gap configuration 1 and the gap configuration 2.

Optionally, the first signaling may be any downlink message or signaling, which is not limited thereto in the present application. For example, the first signaling may be a Media Access Control Control Element (MAC CE) or a Physical Downlink Control Channel (PDCCH).

As another example, the terminal device may determine the part measurement gap configurations for performing the neighboring cell measurement in the at least two sets of measurement gap configurations according to the signal transmission delay between a neighboring cell of the terminal device and the terminal device.

For example, the at least two sets of measurement gap configurations include a gap configuration 1, a gap configuration 2, and a gap configuration 3. The gap configuration 1 includes gapoffset1, the gap configuration 2 includes gapoffset2, the gap configuration 3 includes gapoffset2, and gapoffset1<gapoffset2<gapoffset3. Then, the terminal device may perform neighboring cell measurement according to the gap configuration 3 for a neighboring cell with a great signal transmission delay, and the terminal device may perform the neighboring cell measurement according to the gap configuration 1 for a neighboring cell with a small signal transmission delay.

That is, the at least two sets of measurement gap configurations may be applied to neighboring cell measurements within different signal transmission delay ranges. In other words, neighboring cell measurements with similar transmission delays may be configured to correspond to a set of measurement gap configurations, and neighboring cell measurements within different transmission delay ranges may be configured with different measurement gap configurations. In this way, the duration of a gap does not need to be prolonged to cover a neighboring cell with a great transmission delay difference within one period, or to cover SMTCs of a plurality of neighboring cells. By prolonging a duration of the gap, the serving cell cannot perform data transmission during this period of time, resulting in too long data interruption time, and thus affecting the user experience.

That is to say, in the embodiment of the present application, at least two sets of measurement gap configurations used for the neighboring cell measurement within different signal transmission ranges are configured, so that a serving cell may perform data transmission between the gaps configured by different measurement gap configurations, which reduces the continuous occupation duration of the data transmission time of the serving cell by the neighboring cell measurement, and is beneficial to improving the user experience.

The embodiments of the present application may be applied to any scenario with great signal transmission delays between a neighboring cell and a terminal device and between a serving cell and the terminal device.

As an example, the serving cell of the terminal device is an NTN cell, and the neighboring cell of the terminal device is a terrestrial network cell. As another example, the serving cell of the terminal device is a terrestrial network cell, and the neighboring cell of the terminal device is an NTN cell. As yet another example, both the serving cell and the neighboring cell of the terminal device are NTN cells.

FIG. 3 illustrates a schematic flowchart of a method 300 for neighboring cell measurement according to the invention. As shown in FIG. 3, the method 300 may include, but is not limited to, S310 and S320.

At S310, a terminal device receives a first measurement gap configuration sent by a network device. The first measurement gap configuration is used for configuring a measurement gap for the terminal device to perform neighboring cell measurement, and the first measurement gap configuration includes at least two measurement gap offsets.

At S320, the terminal device performs the neighboring cell measurement based on the first measurement gap configuration.

Optionally, the first measurement gap configuration may be configured based on perUE, that is, each UE may be configured with the respective first measurement gap configuration including at least two measurement gap offsets. The at least two measurement gap offsets are not equal to each other.

Optionally, the terminal device may be configured with the first measurement gap configuration through high-level signaling. For example, the high-level signaling may be RRC signaling.

The terminal device may determine time-domain positions of at least two measurement gaps based on the at least two measurement gap offsets in the first measurement gap configuration configured by the network device and other configuration parameters in the first measurement gap configuration, and further may perform the neighboring cell measurement based on the time-domain position(s) of one or more measurement gaps in the time-domain positions of the at least two measurement gaps. That is, an RS of a neighboring cell is measured to determine a measurement reporting amount. Specific implementation of the RS and the measurement reporting amount may refer to the related implementation of the method 200, and will not be elaborated herein.

The first measurement gap configuration may further include at least one of the following parameters except the at least two measurement gap offsets:
a period of the measurement gap (mgrp), a duration of the measurement gap (mgl), a timing advance of the measurement gap (mgta), or a reference serving cell indicator (refServCellIndicator).

Each of the at least two measurement gap offsets is an offset relative to a starting time position of said period within a period of one measurement gap. That is, each of the measurement gap offsets is an absolute offset.

For example, the at least two measurement gap offsets may include gapoffset1, gapoffset2, and gapoffset3. The terminal device determines three sets of measurement gap configurations based on these three gapoffsets, i.e., time-domain positions of three measurement gaps.

The at least two measurement gap offsets include a reference offset and at least one offset adjustment amount. The reference offset is an offset relative to a starting time-position of said period within a period of one measurement gap. The at least one offset adjustment amount is an offset relative to the reference offset.

That is, the reference offset is an absolute offset, and the at least one offset adjustment amount is a relative offset, which is relative to the absolute offset. For at least one offset adjustment amount, a sum of the absolute offset and the offset adjustment amount is a starting time position of the measurement gap within each period may be determined when the time-domain position of each measurement gap is determined.

For example, the at least two measurement gap offsets may include a reference offset gapoffset_rf and offset adjustment amounts Δoffset1 and Δoffset2, and then the terminal device determines three gapoffsets, which are respectively gapoffset_rf, gapoffset_rf+Δoffset1, and gapoffset_rf+Δoffset2. The terminal device further determines three sets of measurement gap configurations, i.e., time-domain positions of three measurement gaps, based on these three gapoffsets,.

When neighboring cell measurement is performed, the terminal device performs the neighboring cell measurement based on all measurement gap offsets in the at least two measurement gap offsets, or performs the neighboring cell measurement based on part measurement gap offsets in the at least two measurement gap offsets.

Specifically, the terminal device determines at least two sets of measurement gap configurations according to all measurement gap offsets in a first measurement gap offset and other configuration parameters in the first measurement gap offset, and may further perform the neighboring cell measurement based on the time-domain positions of the measurement gaps determined by the at least two sets of measurement gap configurations. Or, the terminal device determines at least one set of measurement gap configurations according to the part measurement gap offsets in the first measurement gap configuration and other configuration parameters in the first measurement gap configuration, and further performs the neighboring cell measurement based on the time-domain position of the measurement gap determined by the at least one set of measurement gap configurations.

Optionally, the part measurement gap offsets may be indicated by the network device, or may be determined independently by the terminal device. No limits are made thereto in the present application.

As an example, the terminal device receives second signaling sent by the network device. The second signaling is used for activating or deactivating one or more measurement gap offsets of the at least two sets of measurement gap offsets. Further, the terminal device may perform the neighboring cell measurement according to a currently activated measurement gap offset.

Optionally, the second signaling may be any downlink message or signaling, which is not limited in the present application. For example, the second signaling may be an MAC CE or a PDCCH.

For example, the at least two measurement gap offsets may include gapoffset1, gapoffset2, and gapoffset3. The network device instructs to activate the gapoffset1 and the gapoffset2, and then the terminal device may determine two sets of measurement gap configurations, i.e., time-domain positions of two measurement gaps, based on the gapoffset1 and gapoffset2, and may further perform the neighboring cell measurement at the time-domain positions of the measurement gaps.

For another example, the at least two measurement gap offsets may include gapoffset1, gapoffset2, and gapoffset3. The network device instructs to deactivate the gapoffset3, and then other gapoffsets, i.e., the gapoffset1 and the gapoffset2 are activated gapoffsets. The terminal device may determine two sets of measurement gap configurations, i.e., the time domain positions of the two measurement gaps, based on the gapoffset1 and the gapoffset2, and further perform the neighboring cell measurement at the time-domain positions of the measurement gaps.

As another example, the terminal device determines a measurement gap offset for performing the neighboring cell measurement in the at least two measurement gap offsets according to a signal transmission delay between a neighboring cell of the terminal device and the terminal device.

For example, the at least two measurement gap offsets may include gapoffset1, gapoffset2, and gapoffset3, and gapoffset1<gapoffset2<gapoffset3. Then, the terminal device may perform neighboring cell measurement according to the gapoffset 13 for a neighboring cell with a great signal transmission delay, and perform the neighboring cell measurement according to the gapoffset1 for a neighboring cell with a great signal transmission delay.

That is, the at least two measurement gap offsets may be applied to neighboring cell measurements within different signal transmission delay ranges. In other words, neighboring cell measurements with similar transmission delays may be configured to correspond to a measurement gap offset, and neighboring cell measurements within different transmission delay ranges may be configured with different measurement gap offsets. In this way, the duration of a gap does not need to be prolonged to cover a neighboring cell with a great different transmission delay difference within one period, or to cover SMTCs of a plurality of neighboring cells. By using a mode of prolonging the duration of the gap, the serving cell cannot perform data transmission within this period of time, resulting in too long data interruption time and affecting the user experience.

That is to say, at least two measurement gap offsets used for the neighboring cell measurement within different signal transmission ranges are configured, and the at least two measurement gap offsets may be combined to other configuration parameters to determine at least two sets of measurement gap configurations. Therefore, a serving cell may perform data transmission between the gaps configured based on different measurement gap configurations, which reduces the continuous occupation duration of the data transmission time of the serving cell by the neighboring cell measurement, and is beneficial to improving the user experience.

The invention may be applied to any scenario with great signal transmission delays between a neighboring cell and a terminal device and between a serving cell and the terminal device.

As an example, the serving cell of the terminal device is an NTN cell, and the neighboring cell of the terminal device is a terrestrial network cell. As another example, the serving cell of the terminal device is a terrestrial network cell, and the neighboring cell of the terminal device is an NTN cell. As yet another example, both the serving cell and the neighboring cell of the terminal device are NTN cells.

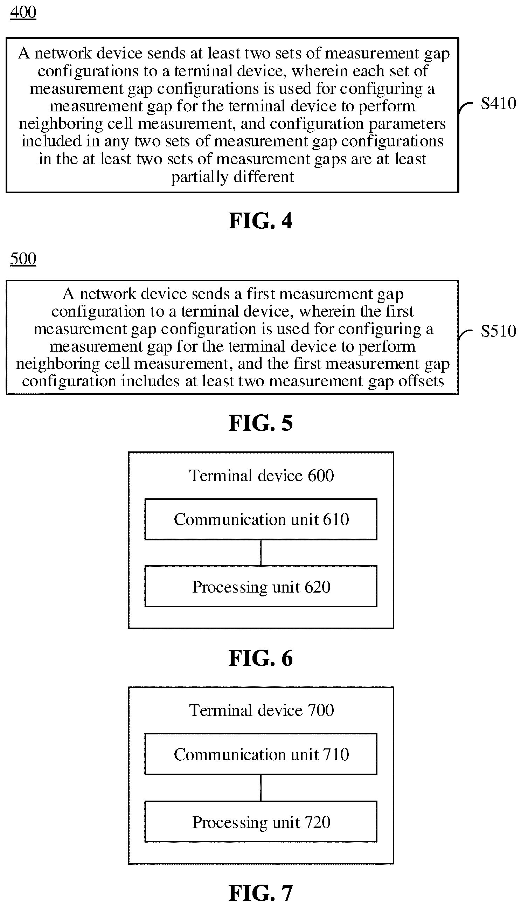

FIG. 4 illustrates a schematic flowchart of a method 400 for neighboring cell measurement according to an embodiment of the present application. As shown in FIG. 4, the method 400 may include, but is not limited to, S410.

At S410, a network device sends at least two sets of measurement gap configurations to a terminal device. Each set of measurement gap configurations is used for configuring a measurement gap for the terminal device to perform neighboring cell measurement, and configuration parameters included in any two sets of measurement gap configurations in the at least two sets of measurement gaps are at least partially different.

In the invention, the each set of measurement gap configurations includes at least one of the following parameters:
a period of the measurement gap, a starting time offset of the measurement gap in one period, a duration of the measurement gap, a timing advance of the measurement gap, or a reference serving cell indicator.

In some embodiments, the starting time offsets of the at least two sets of measurement gap configurations are different. Other configuration parameters except the starting time offsets in the at least two sets of measurement gap configurations are the same.

Optionally, in some embodiments, the method 400 further includes the following operation.

The network device sends first signaling to the terminal network device. The first signaling is used for activating or deactivating one or more sets of measurement gap configurations of the at least two sets of measurement gap configurations.

Optionally, in some embodiments, the first signaling is an MAC CE or a PDCCH.

Optionally, in some embodiments, the at least two sets of measurement gap configurations are configured through RRC signaling.

FIG. 5 illustrates a schematic flowchart of a method 500 for neighboring cell measurement according to the invention. As shown in FIG. 5, the method 500 may include, but is not limited to, S510.

At S510, a network device sends a first measurement gap configuration to a terminal device. The first measurement gap configuration is used for configuring a measurement gap for the terminal device to perform neighboring cell measurement, and the first measurement gap configuration includes at least two measurement gap offsets.

Optionally, the first measurement gap configuration may further include at least one of the following parameters:
a period of the measurement gap, a duration of the measurement gap, a timing advance of the measurement gap, or a reference serving cell indicator.

Optionally, each of the at least two measurement gap offsets is an offset relative to the starting time position of said period within a period of one measurement gap; or
the at least two measurement gap offsets include a reference offset and at least one offset adjustment amount. The reference offset is an offset relative to a starting time position of said period within a period of one measurement gap; and the at least one offset adjustment amount is an offset relative to the reference offset.

Optionally, the method 500 further includes the following operation.

The network device sends second signaling to the terminal device. The second signaling is used for activating or deactivating one or more measurement gap offsets of the at least two measurement gap offsets.

Optionally, the second signaling is an MAC CE or a PDCCH.

Optionally, the first measurement gap configuration is configured through RRC signaling.

Method embodiments of the present application are described in detail above with reference to FIG. 2 to FIG. 5. Apparatus embodiments of the application will be described in detail below with reference to FIG. 6 to FIG. 11. It is to be understood that the apparatus embodiments correspond to the method embodiments, and similar description may refer to the method embodiments.

FIG. 6 illustrates a schematic block diagram of a terminal device 600 according to the invention. As shown in FIG. 6, the terminal device 600 includes a communication unit 610 and a processing unit 620.

The communication unit 610 is configured to receive at least two sets of measurement gap configurations sent by a network device. Each set of measurement gap configurations is used for configuring a measurement gap for the terminal device to perform neighboring cell measurement, and configuration parameters included in any two sets of measurement gap configurations in the at least two sets of measurement gaps are at least partially different.

The processing unit 620 is configured to perform the neighboring cell measurement in a measurement gap configured by at least one set of measurement gap configurations of the at least two sets of measurement gap configurations.

In the invention, the each set of measurement gap configurations may include at least one of the following parameters:
a period of the measurement gap, a starting time offset of the measurement gap in one period, a duration of the measurement gap, a timing advance of the measurement gap, or a reference serving cell indicator.

Starting time offsets in the at least two sets of measurement gap configurations are different. Other configuration parameters except the starting time offsets in the at least two sets of measurement gap configurations are the same.

Optionally, the processing unit 620 is further configured to: perform the neighboring cell measurement in a measurement gap configured by all measurement gap configurations of the at least two sets of measurement gap configurations; or perform the neighboring cell measurement in a measurement gap configured by part measurement gap configurations of the at least two sets of measurement gap configurations.

Optionally, the communication unit 610 is further configured to: receive first signaling sent by the network device. The first signaling is used for activating or deactivating one or more measurement gap configurations of the at least two sets of measurement gap configurations.

The processing unit 620 is further configured to: take A currently activated measurement gap configuration as a measurement gap configuration for performing the neighboring cell measurement.

Optionally, the first signaling is an MAC CE or a PDCCH.

Optionally, the processing unit 620 is further configured to: determine the part measurement gap configurations for performing the neighboring cell measurement in the at least two sets of measurement gap configurations according to the signal transmission delay between a neighboring cell of the terminal device and the terminal device.

Optionally, the at least two sets of measurement gap configurations are configured through RRC signaling.

Optionally, the serving cell of the terminal device is an NTN cell, and the neighboring cell of the terminal device is a terrestrial network cell; or the serving cell of the terminal device is a terrestrial network cell, and the neighboring cell of the terminal device is an NTN cell; or both the serving cell and the neighboring cell of the terminal device are NTN cells.

It is to be understood that the terminal device 600 according to the invention may correspond to the terminal device in the invention, and the abovementioned and other operations and/or functions of various units in the terminal device 600 are used to implement the corresponding flows executed by the terminal device in the method shown in FIG. 2 respectively, and will not be elaborated here for simplicity.

FIG. 7 illustrates a schematic block diagram of a terminal device 700 according to the invention. As shown in FIG. 7, the terminal device 700 includes a communication unit 710 and a processing unit 720.

The communication unit 710 is configured to receive a first measurement gap configuration sent by a network device. The first measurement gap configuration is used for configuring a measurement gap for the terminal device to perform neighboring cell measurement, and the first measurement gap configuration includes at least two measurement gap offsets.

The processing unit 720 is configured to perform the neighboring cell measurement based on the first measurement gap configuration.

Optionally, the first measurement gap configuration may further include at least one of the following parameters:
a period of the measurement gap, a duration of the measurement gap, a timing advance of the measurement gap, or a reference serving cell indicator.

Optionally, each of the at least two measurement gap offsets are an offset relative to a starting time position of said period within a period of one measurement gap; or
the at least two measurement gap offsets include a reference offset and at least one offset adjustment amount. The reference offset is an offset relative to a starting time position of said period within a period of one measurement gap; and the at least one offset adjustment amount is an offset relative to the reference offset.

Optionally, the processing unit 720 is specifically configured to: perform the neighboring cell measurement based on all measurement gap offsets in the at least two measurement gap offsets; or perform the neighboring cell measurement based on part measurement gap offsets in the at least two measurement gap offsets.

Optionally, the processing unit 720 is further configured to: determine at least two sets of measurement gap configurations according to all measurement gap offsets in the first measurement gap configuration and other configuration parameters in the first measurement gap configuration; and perform the neighboring cell measurement based on the at least two sets of measurement gap configurations.

Optionally, the processing unit 720 is further configured to: determine at least one set of measurement gap configurations according to the part measurement gap offsets in the first measurement gap configuration and other configuration parameters in the first measurement gap configuration; and perform the neighboring cell measurement based on the at least one set of measurement gap configurations.

Optionally, the communication unit 710 is further configured to: receive second signaling sent by the network device. The second signaling is used for activating or deactivating one or more measurement gap offsets of the at least two sets of measurement gap offsets.

The processing unit 720 is further configured to: take a currently activated measurement gap offset as a measurement gap offset for performing the neighboring cell measurement.

Optionally, the second signaling is an MAC CE or a PDCCH.

Optionally, the processing unit 720 is further configured to: determine a measurement gap offset for performing the neighboring cell measurement in the at least two measurement gap offsets according to a signal transmission delay between a neighboring cell of the terminal device and the terminal device.

Optionally, the first measurement gap configuration is configured through RRC signaling.

Optionally, the serving cell of the terminal device is an NTN cell, and the neighboring cell of the terminal device is a terrestrial network cell; or the serving cell of the terminal device is a terrestrial network cell, and the neighboring cell of the terminal device is an NTN cell; or both the serving cell and the neighboring cell of the terminal device are NTN cells.

It is to be understood that the terminal device 700 according to the invention may correspond to the terminal device in the invention, and the abovementioned and other operations and/or functions of each unit in the terminal device 700 are used to implement the corresponding flows executed by the terminal device in the method shown in FIG. 3 respectively, and will not be elaborated here for simplicity.

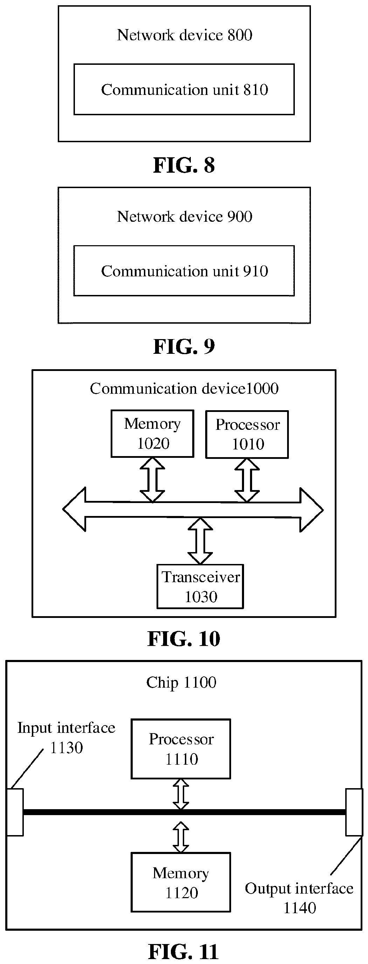

FIG. 8 illustrates a schematic block diagram of a network device 800 according to the invention. As shown in FIG. 8, the network device 800 includes a communication unit 810.

The communication unit 810 is configured to send at least two sets of measurement gap configurations to a terminal device. Each set of measurement gap configurations is used for configuring a measurement gap for the terminal device to perform neighboring cell measurement, and configuration parameters included in any two sets of measurement gap configurations in the at least two sets of measurement gaps are at least partially different.

In the invention, the each set of measurement gap configurations may include at least one of the following parameters:
a period of the measurement gap, a starting time offset of the measurement gap in one period, a duration of the measurement gap, a timing advance of the measurement gap, or a reference serving cell indicator.

Optionally, starting time offsets of the at least two sets of measurement gap configurations are different. Other configuration parameters except the starting time offsets in the at least two sets of measurement gap configurations are the same.

Optionally, the communication unit 810 is further configured to: send first signaling to the terminal device. The first signaling is used for activating or deactivating one or more sets of measurement gap configurations of the at least two sets of measurement gap configurations.

Optionally, the first signaling is an MAC CE or a PDCCH.

Optionally, the at least two sets of measurement gap configurations are configured through RRC.

Optionally, the abovementioned communication unit may be a communication interface or a transceiver, or a communication chip, or an input/output interface of a system on chip. The abovementioned processing unit may be one or more processors.

It is to be understood that the network device 800 according to the invention may correspond to the terminal device in the invention, and the abovementioned and other operations and/or functions of each unit in the network device 800 are used to implement the corresponding flows executed by the terminal device in the method shown in FIG. 4 respectively, and will not be elaborated here for simplicity.

FIG. 9 illustrates a schematic block diagram of a network device 900 according to the invention. As shown in FIG. 9, the network device 900 includes a communication unit 910.

The communication unit 910 is configured to send a first measurement gap configuration to a terminal device. The first measurement gap configuration is used for configuring a measurement gap for the terminal device to perform neighboring cell measurement, and the first measurement gap configuration includes at least two measurement gap offsets.

Optionally, the first measurement gap configuration may further include at least one of the following parameters:
a period of the measurement gap, a duration of the measurement gap, a timing advance of the measurement gap, or a reference serving cell indicator.

Optionally, each of the at least two measurement gap offsets is an offset relative to a starting time position of said period within a period of one measurement gap; or
the at least two measurement gap offsets include a reference offset and at least one offset adjustment amount. The reference offset is an offset relative to a starting time position of said period within a period of one measurement gap; and the at least one offset adjustment amount is an offset relative to the reference offset.

Optionally, the communication unit 910 is further configured to: send second signaling to a terminal device. The second signaling is used for activating or deactivating one or more measurement gap offsets of the at least two measurement gap offsets.

Optionally, the second signaling is an MAC CE or a PDCCH.

Optionally, the first measurement gap configuration is configured through RRC signaling.

Optionally, the abovementioned communication unit may be a communication interface or a transceiver, or a communication chip, or an input/output interface of a system on chip. The abovementioned processing unit may be one or more processors.

It is to be understood that the network device 900 according to the invention may correspond to the terminal device in the invention, and the abovementioned and other operations and/or functions of each unit in the network device 900 are used to implement the corresponding flows executed by the terminal device in the method shown in FIG. 5 respectively, and will not be elaborated here for simplicity.

FIG. 10 illustrates a schematic structural diagram of a communication device 1000 provided by an embodiment of the present application. The communication device 1000 as shown in FIG. 10 includes a processor 1010. The processor 1010 is configured to call from a memory and run a computer program to implement the methods in the embodiments of the present application.

As shown in FIG. 10, the communication device 1000 further includes a memory 1020. The processor 1010 is configured to call from the memory 1020 and run the computer program to implement the methods in the embodiments of the present application.

The memory 1020 may be independent of the processor 1010, or may be integrated into the processor 1010.

Optionally, as shown in FIG. 9, the communication device 1000 may further include a transceiver 1030. The processor 1010 may control the transceiver 1030 to be in communication with other devices, specifically, to send information or data to other devices, or receive the information or data sent by other devices.

The transceiver 1030 may include a transmitter and a receiver. The transceiver 1030 may further include an antenna. There may be one or more antennae.

The communications device 1000 is specifically a network device of the embodiment of the present application, and the communication device 1000 implements corresponding flows implemented by the network device in various methods of the embodiments of the present application, which will not be elaborated here for simplicity.

The communications device 1000 is specifically a mobile terminal/terminal device of the embodiment of the present application, and the communication device 1000 implements corresponding flows implemented by the mobile terminal/the terminal device in various methods of the embodiments of the present application, which will not be elaborated here for simplicity.

FIG. 11 illustrates a schematic structural diagram of a chip according to the invention. The chip 1100 as shown in FIG. 11 includes a processor 1110. The processor 1110 may call from a memory and run a computer program to implement the method in the embodiments of the present application.

Optionally, as shown in FIG. 11, the chip 1100 may further include a memory 1120. The processor 1110 may call from the memory 1120 and run the computer program to implement the method in the embodiments of the present application.

The memory 1120 may be independent of the processor 1110, or may be integrated into the processor 1110.

Optionally, the chip 1100 may further include an input interface 1130. The processor 1110 may control the input interface 1130 to be in communication with other devices or chips, and specifically to acquire the information or data sent by other devices or chips.

Optionally, the chip 1100 may further include an output interface 1140. The processor 1110 may control the output interface 1140 to be in communication with other devices or chips, and specifically, to output information or data sent to other devices or chips.

Optionally, the chip 1100 may be applied to a network device in the embodiments of the present application, and the chip 1100 may implement corresponding flows implemented by the network device in various methods of the embodiments of the present application, which will not be elaborated here for simplicity.

Optionally, the chip 1100 may be applied to a mobile terminal/terminal device in the embodiments of the present application, and the chip 1100 may implement corresponding flows implemented by the mobile terminal/terminal device in various methods of the embodiments of the present application, which will not be elaborated here for simplicity.

Optionally, the apparatus mentioned in the embodiments of the present application may also be a chip. For example, the apparatus may be a system-level chip, a system chip, a chip system or a system on chip, etc.

The embodiments of the application further provide a communication system. The communication system includes a terminal device and a network device. The terminal device may be configured to realize corresponding functions realized by the terminal device in the abovementioned method, and the network device may be configured to realize corresponding functions realized by the network device in the abovementioned method, which will not be elaborated here for simplicity.

It should be understood that the processor of the embodiments of the present application may be an integrated circuit chip with signal processing capability. In an implementation process, various steps of the abovementioned method embodiments may be completed by integrated logic circuits of hardware in the processor or instructions in the form of software. The abovementioned processor may be a general-purpose processor, a Digital Signal Processor (DSP), an Application Specific Integrated Circuit (ASIC), a Field Programmable Gate Array (FPGA), or other programmable logic devices, discrete gate or transistor logic devices, and discrete hardware components. Various methods, steps, and logical block diagrams of the disclosure in the embodiments of the present application may be implemented or performed. The general-purpose processor may be a microprocessor, any conventional processor, or the like. Steps of the methods disclosed with reference to the embodiments of the present application may be directly performed and accomplished by a hardware decoding processor, or may be performed and accomplished by a combination of hardware and software modules in the decoding processor. The software module may be located in a storage medium mature in the art, such as a random access memory, a flash memory, a read-only memory, a programmable read-only memory or electrically erasable programmable memory, or a register. The storage medium is located in the memory, and the processor reads information in the memory and completes the steps in the foregoing methods in combination with hardware of the processor.

It may be understood that the memory in the embodiments of the present application may be a volatile memory or a nonvolatile memory, or may include a volatile memory and a nonvolatile memory. The non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which is used as an external cache. By way of example but not restrictive description, many forms of RAMs may be used, for example, a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). It should be noted that the memory of the systems and methods described in this specification includes, but is not limited to, these and any other proper types of memories.

It should be understood that the abovementioned memories are exemplary but not restrictive. For example, the memory in the embodiments of the present application may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a Direct Rambus RAM (DR RAM). That is to say, the memories described in the embodiment of the application are intended to include, but not limited to, these and any other suitable types of memories.

The embodiments of the present application further provide a computer readable storage medium, which is configured to store a computer program.

Optionally, the computer readable storage medium may be applied to a network device in the embodiments of the present application. The computer program enables a computer to execute corresponding flows implemented by the network device in each method of the embodiments of the present application, which will not be elaborated here for simplicity.

Optionally, the computer readable storage medium may be applied to a mobile terminal/terminal device in the embodiments of the present application. The computer program enables a computer to execute corresponding flows implemented by the mobile terminal/terminal device in each method of the embodiments of the present application, which will not be elaborated here for simplicity.

The embodiments of the application further provide a computer program product, which includes a computer program instruction.

Optionally, the computer program product may be applied to a network device in the embodiments of the present application. The computer program instruction enables a computer to execute corresponding flows implemented by the network device in each method of the embodiments of the present application, which will not be elaborated here for simplicity.

Optionally, the computer program product may be applied to a mobile terminal/terminal device in the embodiments of the present application. The computer program instruction enables a computer to execute corresponding flows implemented by the mobile terminal/terminal device in each method of the embodiments of the present application, which will not be elaborated here for simplicity.

The embodiments of the application further provide a computer program.

Optionally, the computer program may be applied to a network device in the embodiments of the present application. The computer program runs in a computer to enable the computer to execute corresponding flows implemented by the network device in each method of the embodiments of the present application, which will not be elaborated here for simplicity.

Optionally, the computer program may be applied to a mobile terminal/terminal device in the embodiments of the present application. The computer program, when running on a computer, enables the computer to execute corresponding flows implemented by the mobile terminal/terminal device in each method of the embodiments of the present application, which will not be elaborated here for simplicity.

Those of ordinary skill in the art may be aware that the units and algorithm steps in the examples described with reference to the embodiments disclosed in this specification can be implemented by electronic hardware or a combination of computer software and electronic hardware. Whether the functions are performed by hardware or software depends on particular applications and design constraints of the technical solutions. Those skilled in the art may implement the described functions in different ways for each specific application, but such implementation should not be considered beyond the scope of the present application.

It may be clearly understood by a person skilled in the art that, for the purpose of convenient and brief description, for a detailed working process of the foregoing system, apparatus, and unit, reference may be made to a corresponding process in the foregoing method embodiments, and details are not described again herein.

In the several embodiments provided in the present application, it should be understood that the disclosed system, apparatus, and method may be implemented in other manners. For example, the described apparatus embodiments are merely schematic. For example, the unit division is merely logical function division and may be other division in actual implementation. For example, a plurality of units or components may be combined or integrated into another system, or some features may be ignored or may not be performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network elements. Some or all of the units may be selected based on actual requirements to achieve the objectives of the solutions of the embodiments.

In addition, functional units in the embodiments of the present application may be integrated into one processing unit, or each of the units may exist alone physically, or two or more units are integrated into one unit.

When the functions are realized in a form of a software functional unit and sold or used as an independent product, they may be stored in a computer readable storage medium. Based on such an understanding, the technical solutions of the present application essentially, or the part contributing to the prior art, or some of the technical solutions may be implemented in a form of a software product. The software product is stored in a storage medium, and includes several instructions for instructing a computer device (which may be a personal computer, a server, a network device, or the like) to perform all or some of the steps of the methods described in the embodiments of the present application. The foregoing storage medium includes: various media capable of storing program codes, such as a USB flash disc, a mobile hard disc, a Read-Only Memory (ROM), a Random Access Memory (RAM), a magnetic disc, or a compact disc.

The above descriptions are merely specific implementation modes of the present application, but are not intended to limit the protection scope of the present application. Any variation or replacement readily figured out by a person skilled in the art within the technical scope disclosed in the present application shall fall within the protection scope of the present application. Therefore, the protection scope of the present application shall be subject to the protection scope of the claims.

When the functions are realized in a form of a software functional unit and sold or used as an independent product, they may be stored in a computer readable storage medium. Based on such an understanding, the technical solutions of the present application essentially, or the part contributing to the prior art, or some of the technical solutions may be implemented in a form of a software product. The software product is stored in a storage medium, and includes several instructions for instructing a computer device (which may be a personal computer, a server, a network device, or the like) to perform all or some of the steps of the methods described in the embodiments of the present application. The foregoing storage medium includes: various media capable of storing program codes, such as a USB flash disc, a mobile hard disc, a Read-Only Memory (ROM), a Random Access Memory (RAM), a magnetic disc, or a compact disc.

The above descriptions are merely specific implementation modes of the present application, but are not intended to limit the protection scope of the present application. The protection scope of the present application shall be subject to the protection scope of the claims.

## Claims

1. A method for neighboring cell measurement, the method comprising:
receiving (S210), by a terminal device, at least two sets of measurement gap configurations sent by a network device, wherein each set of measurement gap configurations is used for configuring a measurement gap for the terminal device to perform neighboring cell measurement and comprises at least one of the following parameters: a period of the measurement gap configured using each set of measurement gap configurations, a starting time offset of the measurement gap in one period, a duration of the measurement gap, a timing advance of the measurement gap or a reference serving cell indicator, and configuration parameters comprised in any two sets of measurement gap configurations in the at least two sets of measurement gap configurations are at least partially different, wherein starting time offsets in the at least two sets of measurement gap configurations are different; and other configuration parameters except the starting time offsets in the at least two sets of measurement gap configurations are the same; and
performing (S220), by the terminal device, the neighboring cell measurement in a measurement gap configured by at least one set of measurement gap configurations of the at least two sets of measurement gap configurations.

2. The method of claim 1, wherein the performing (S220), by the terminal device, the neighboring cell measurement in a measurement gap configured by at least one set of measurement gap configurations of the at least two sets of measurement gap configurations comprises:
performing, by the terminal device, the neighboring cell measurement in a measurement gap configured by all measurement gap configurations of the at least two sets of measurement gap configurations; or
performing, by the terminal device, the neighboring cell measurement in a measurement gap configured by part measurement gap configurations of the at least two sets of measurement gap configurations.

3. The method of claim 2, further comprising:
receiving, by the terminal device, first signaling sent by the network device, wherein the first signaling is used for activating or deactivating one or more measurement gap configurations of the at least two sets of measurement gap configurations; and
taking a currently activated measurement gap configuration as a measurement gap configuration for performing the neighboring cell measurement,
wherein the first signaling is a Media Access Control, MAC, Control Element, CE, or a Physical Downlink Control Channel, PDCCH.

4. The method of claim 2, further comprising:
determining, by the terminal device, the part measurement gap configurations for performing the neighboring cell measurement in the at least two sets of measurement gap configurations according to a signal transmission delay between a neighboring cell of the terminal device and the terminal device.

5. The method of any one of claims 1 to 4, wherein the at least two sets of measurement gap configurations are configured through Radio Resource Control,RRC, signaling.

6. The method of any one of claims 1 to 5, wherein a serving cell of the terminal device is a Non Terrestrial Network, NTN, cell, and a neighboring cell of the terminal device is a terrestrial network cell; or
the serving cell of the terminal device is a terrestrial network cell, and the neighboring cell of the terminal device is an NTN cell; or
both the serving cell and the neighboring cell of the terminal device are NTN cells

7. A method for neighboring cell measurement, the method comprising:
sending (S410), by a network device, at least two sets of measurement gap configurations to a terminal device, wherein each set of measurement gap configurations is used for configuring a measurement gap for the terminal device to perform neighboring cell measurement and comprises at least one of the following parameters: a period of the measurement gap configured using each set of measurement gap configurations, a starting time offset of the measurement gap in one period, a duration of the measurement gap, a timing advance of the measurement gap or a reference serving cell indicator, and configuration parameters comprised in any two sets of measurement gap configurations in the at least two sets of measurement gap configurations are at least partially different, wherein starting time offsets in the at least two sets of measurement gap configurations are different; and other configuration parameters except the starting time offsets in the at least two sets of measurement gap configurations are the same.

8. The method of claim 7, further comprising:
sending, by the network device, first signaling to the terminal network device, wherein the first signaling is used for activating or deactivating one or more measurement gap configurations of the at least two sets of measurement gap configurations,
wherein the first signaling is a Media Access Control, MAC, Control Element, CE, or a Physical Downlink Control Channel, PDCCH.

9. The method of claim 7 or 8, wherein the at least two sets of measurement gap configurations are configured through Radio Resource Control, RRC, signaling.

10. A terminal device, comprising a processor (1010) and a memory (1020), wherein the memory (1020) is configured to store a computer program, and the processor (1010) is configured to call and run the computer program stored in the memory to execute the method of any one of claims 1 to 6.

11. A network device, comprising a processor (1010) and a memory (1020), wherein the memory (1020) is configured to store a computer program, and the processor (1010) is configured to call and run the computer program stored in the memory to or to execute the method of any one of claims 7 to 9.

12. A computer-readable storage medium, configured to store a computer program, the computer program enabling a computer to execute the method of any one of claims 1 to 6 or to execute the method of any one of claims 7 to 9.

## Patentansprüche

1. Verfahren zur Nachbarzellenmessung, wobei das Verfahren Folgendes umfasst:
Empfangen (S210) mindestens zweier Sätze von Messspaltkonfigurationen, die von einem Netzwerkgerät gesendet werden, durch ein Endgerät, wobei jeder Satz von Messspaltkonfigurationen zum Konfigurieren eines Messspalts für das Endgerät verwendet wird, um eine Nachbarzellenmessung durchzuführen, und mindestens einen der folgenden Parameter umfasst: eine Periode des Messspalts, die mit Hilfe jedes Satzes von Messspaltkonfigurationen konfiguriert wird, einen Startzeitversatz des Messspaltes in einer Periode, eine Dauer des Messspalts, einen zeitlichen Fortschritt des Messspalts oder einen Referenzindikator einer bedienenden Zelle, und Konfigurationsparameter, die in beliebigen zwei Sätzen von Messspaltkonfigurationen in den mindestens zwei Sätzen von Messspaltkonfigurationen enthalten sind, zumindest teilweise verschieden sind, wobei Startzeitversätze in den mindestens zwei Sätzen von Messspaltkonfigurationen verschieden sind und weitere Konfigurationsparameter mit Ausnahme der Startzeitversätze in den mindestens zwei Sätzen von Messspaltkonfigurationen gleich sind, und
Durchführen (S220) der Nachbarzellenmessung durch das Endgerät in einem Messspalt, der durch mindestens einen Satz von Messspaltkonfigurationen der mindestens zwei Sätze von Messspaltkonfigurationen konfiguriert ist.

2. Verfahren nach Anspruch 1, wobei das Durchführen (S220) der Nachbarzellenmessung durch das Endgerät in einem Messspalt, der durch mindestens einen Satz von Messspaltkonfigurationen der mindestens zwei Sätze von Messspaltkonfigurationen konfiguriert ist, Folgendes umfasst:
Durchführen der Nachbarzellenmessung durch das Endgerät in einem Messspalt, der durch alle Messspaltkonfigurationen der mindestens zwei Sätze von Messspaltkonfigurationen konfiguriert wird, oder
Durchführen der Nachbarzellenmessung durch das Endgerät in einem Messspalt, der durch einen Teil der Messspaltkonfigurationen der mindestens zwei Sätze von Messspaltkonfigurationen konfiguriert ist.

3. Verfahren nach Anspruch 2, ferner Folgendes umfassend:
Empfangen erster Signalisierung, die von dem Netzwerkgerät gesendet wird, durch das Endgerät, wobei die erste Signalisierung verwendet wird, um eine oder mehrere Messspaltkonfigurationen der mindestens zwei Sätze von Messspaltkonfigurationen zu aktivieren oder zu deaktivieren, und
Nehmen einer aktuell aktivierten Messspaltkonfiguration als Messspaltkonfiguration zum Durchführen der Nachbarzellenmessung,
wobei die erste Signalisierung ein MAC-, Media-Access-Control-, Steuerelement, CE, oder ein PDCCH, Physical Downlink Control Channel, ist.

4. Verfahren nach Anspruch 2, ferner Folgendes umfassend:
Bestimmen des Teils der Messspaltkonfigurationen durch das Endgerät zum Durchführen der Nachbarzellenmessung in den mindestens zwei Sätzen von Messspaltkonfigurationen gemäß einer Signalübertragungsverzögerung zwischen einer Nachbarzelle des Endgeräts und dem Endgerät.

5. Verfahren nach einem der Ansprüche 1 bis 4, wobei die mindestens zwei Sätze von Messspaltkonfigurationen durch eine RRC-, Radio-Ressource-Control-, Signalisierung konfiguriert werden.

6. Verfahren nach einem der Ansprüche 1 bis 5, wobei eine bedienende Zelle des Endgeräts eine NTN-, Non-Terrestrial-Network-, Zelle ist und eine Nachbarzelle des Endgeräts eine Zelle eines terrestrischen Netzwerks ist oder
die bedienende Zelle des Endgeräts eine Zelle eines terrestrischen Netzwerks ist und die Nachbarzelle des Endgeräts eine NTN-Zelle ist oder
sowohl die bedienende Zelle als auch die Nachbarzelle des Endgeräts NTN-Zellen sind.

7. Verfahren zur Nachbarzellenmessung, wobei das Verfahren Folgendes umfasst:
Senden (S410) mindestens zweier Sätze von Messspaltkonfigurationen an ein Endgerät durch ein Netzwerkgerät, wobei jeder Satz von Messspaltkonfigurationen zum Konfigurieren eines Messspalts für das Endgerät verwendet wird, um eine Nachbarzellenmessung durchzuführen, und mindestens einen der folgenden Parameter umfasst: eine Periode des Messspalts, die mit Hilfe jedes Satzes von Messspaltkonfigurationen konfiguriert wird, einen Startzeitversatz des Messspaltes in einer Periode, eine Dauer des Messspalts, einen zeitlichen Fortschritt des Messspalts oder einen Referenzindikator einer bedienenden Zelle, und Konfigurationsparameter, die in beliebigen zwei Sätzen von Messspaltkonfigurationen in den mindestens zwei Sätzen von Messspaltkonfigurationen enthalten sind, zumindest teilweise verschieden sind, wobei Startzeitversätze in den mindestens zwei Sätzen von Messspaltkonfigurationen verschieden sind und weitere Konfigurationsparameter mit Ausnahme der Startzeitversätze in den mindestens zwei Sätzen Messspaltkonfigurationen gleich sind.

8. Verfahren nach Anspruch 7, ferner Folgendes umfassend:
Senden erster Signalisierung an das End-Netzwerk-Gerät durch das Netzwerkgerät, wobei die erste Signalisierung verwendet wird, um eine oder mehrere Messspaltkonfigurationen der mindestens zwei Sätze von Messspaltkonfigurationen zu aktivieren oder zu deaktivieren,
wobei die erste Signalisierung ein MAC-, Media-Access-Control-, Steuerelement, CE, oder ein PDCCH, Physical Downlink Control Channel, ist.

9. Verfahren nach Anspruch 7 oder 8, wobei die mindestens zwei Sätze End-Netzwerk-Gerät Messspaltkonfigurationen durch eine RRC-, Radio-Ressource-Control-, Signalisierung konfiguriert werden.

10. Endgerät, einen Prozessor (1010) und einen Speicher (1020) umfassend, wobei der Speicher (1020) dafür konfiguriert ist, ein Computerprogramm zu speichern, und der Prozessor (1010) dafür konfiguriert ist, das in dem Speicher gespeicherte Computerprogramm aufzurufen und abzuarbeiten, um das Verfahren nach einem der Ansprüche 1 bis 6 durchzuführen.

11. Netzwerkgerät, einen Prozessor (1010) und einen Speicher (1020) umfassend, wobei der Speicher (1020) dafür konfiguriert ist, ein Computerprogramm zu speichern und der Prozessor (1010) dafür konfiguriert ist, das in dem Speicher gespeicherte Computerprogramm aufzurufen und abzuarbeiten, um das Verfahren nach einem der Ansprüche 7 bis 9 durchzuführen.

12. Computerlesbares Speichermedium, dafür konfiguriert, ein Computerprogramm zu speichern, wobei das Computerprogramm einen Computer in die Lage versetzt, das Verfahren nach einem der Ansprüche 1 bis 6 auszuführen oder das Verfahren nach einem der Ansprüche 7 bis 9 auszuführen.

## Revendications

1. Procédé de mesure de cellule voisine, le procédé comprenant :
la réception (S210), par un dispositif terminal, d'au moins deux ensembles de configurations d'intervalles de mesure envoyés par un dispositif de réseau, dans lequel chaque ensemble de configurations d'intervalles de mesure est utilisé pour configurer un intervalle de mesure pour que le dispositif terminal réalise une mesure de cellule voisine et comprend au moins un des paramètres suivants : une période de l'intervalle de mesure configurée en utilisant chaque ensemble de configurations d'intervalles de mesure, un décalage de temps de commencement de l'intervalle de mesure dans une période, une durée de l'intervalle de mesure, une avance de temporisation de l'intervalle de mesure ou un indicateur de la cellule de service de référence, et des paramètres de configuration compris dans n'importe quels deux ensembles de configurations d'intervalles de mesure dans les au moins deux ensembles de configurations d'intervalles de mesure sont au moins partiellement différents, dans lequel les décalages de temps de commencement dans les au moins deux ensembles de configurations d'intervalles de mesure sont différents ; et d'autres paramètres de configuration à l'exception des décalages de temps de commencement dans les au moins deux ensembles de configurations d'intervalles de mesure sont les mêmes ; et
la réalisation (S220), par le dispositif terminal, de la mesure de cellule voisine dans un intervalle de mesure configuré par au moins un ensemble de configurations d'intervalles de mesure des au moins deux ensembles de configurations d'intervalles de mesure.

2. Procédé de la revendication 1, dans lequel la réalisation (S220), par le dispositif terminal, de la mesure de cellule voisine dans un intervalle de mesure configuré par au moins un ensemble de configurations d'intervalles de mesure des au moins deux ensembles de configurations d'intervalles de mesure comprend :
la réalisation, par le dispositif terminal, de la mesure de cellule voisine dans un intervalle de mesure configuré par toutes les configurations d'intervalles de mesure des au moins deux ensembles de configurations d'intervalles de mesure ; ou
la réalisation, par le dispositif terminal, de la mesure de cellule voisine dans un intervalle de mesure configuré par des configurations d'intervalles de mesure partielles des au moins deux ensembles de configurations d'intervalles de mesure.

3. Procédé de la revendication 2, comprenant en outre :
la réception, par le dispositif terminal, d'une première signalisation envoyée par le dispositif de réseau, dans lequel la première signalisation est utilisée pour activer ou désactiver une ou plusieurs configurations d'intervalles de mesure des au moins deux ensembles de configurations d'intervalles de mesure ; et
la prise en considération d'une configuration d'intervalles de mesure activée actuellement en tant que configuration d'intervalles de mesure pour réaliser la mesure de cellule voisine,
dans lequel la première signalisation est un contrôle d'accès au support, MAC, un élément de commande, CE, ou un canal de commande physique de liaison descendante, PDCCH.

4. Procédé de la revendication 2, comprenant en outre :
la détermination, par le dispositif terminal, des configurations d'intervalles de mesure partielles pour réaliser la mesure de cellule voisine dans les au moins deux ensembles de configurations d'intervalles de mesure en fonction d'un retard de transmission de signal entre une cellule voisine du dispositif terminal et le dispositif terminal.

5. Procédé de n'importe laquelle des revendications 1 à 4, dans lequel les au moins deux ensembles de configurations d'intervalles de mesure sont configurés par l'intermédiaire d'une signalisation RRC, commande des ressources radio.

6. Procédé de n'importe laquelle des revendications 1 à 5, dans lequel une cellule de service du dispositif terminal est une cellule du réseau non terrestre, NTN, et une cellule voisine du dispositif terminal est une cellule de réseau terrestre ; ou
la cellule de service du dispositif terminal est une cellule du réseau terrestre, et la cellule voisine du dispositif terminal est une cellule du NTN ; ou
à la fois la cellule de service et la cellule voisine du dispositif terminal sont des cellules du NTN.

7. Procédé de mesure de cellule voisine, le procédé comprenant :
l'envoi (S410), par un dispositif de réseau, d'au moins deux ensembles de configurations d'intervalles de mesure à un dispositif terminal, dans lequel chaque ensemble de configurations d'intervalles de mesure est utilisé pour configurer un intervalle de mesure pour que le dispositif terminal réalise une mesure de cellule voisine et comprend au moins un des paramètres suivants : une période de l'intervalle de mesure configurée en utilisant chaque ensemble de configurations d'intervalles de mesure, un décalage de temps de commencement de l'intervalle de mesure dans une période, une durée de l'intervalle de mesure, une avance de temporisation de l'intervalle de mesure ou un indicateur de la cellule de service de référence, et des paramètres de configuration compris dans n'importe quels deux ensembles de configurations d'intervalles de mesure dans les au moins deux ensembles de configurations d'intervalles de mesure sont au moins partiellement différents, dans lequel les décalages de temps de commencement dans les au moins deux ensembles de configurations d'intervalles de mesure sont différents ; et d'autres paramètres de configuration à l'exception des décalages de temps de commencement dans les au moins deux ensembles de configurations d'intervalles de mesure sont les mêmes.

8. Procédé de la revendication 7, comprenant en outre :
l'envoi, par le dispositif de réseau, d'une première signalisation au dispositif de réseau terminal, dans lequel la première signalisation est utilisée pour activer ou désactiver une ou plusieurs configurations d'intervalles de mesure des au moins deux ensembles de configurations d'intervalles de mesure,
dans lequel la première signalisation est un contrôle d'accès au support, MAC, un élément de commande, CE, ou un canal de commande physique de liaison descendante, PDCCH.

9. Procédé de la revendication 7 ou 8, dans lequel les au moins deux ensembles de configurations d'intervalles de mesure sont configurés par l'intermédiaire d'une signalisation RRC, commande des ressources radio.

10. Dispositif terminal, comprenant un processeur (1010) et une mémoire (1020), dans lequel la mémoire (1020) est configurée pour stocker un programme informatique, et le processeur (1010) est configuré pour solliciter et mettre en œuvre le programme informatique stocké dans la mémoire afin d'exécuter le procédé de n'importe laquelle des revendications 1 à 6.

11. Dispositif de réseau, comprenant un processeur (1010) et une mémoire (1020), dans lequel la mémoire (1020) est configurée pour stocker un programme informatique, et le processeur (1010) est configuré pour solliciter et mettre en œuvre le programme informatique stocké dans la mémoire afin d'exécuter le procédé de n'importe laquelle des revendications 7 à 9.

12. Support de stockage lisible par ordinateur, configuré pour stocker un programme informatique, le programme informatique permettant à un ordinateur d'exécuter le procédé de n'importe laquelle des revendications 1 à 6 ou d'exécuter le procédé de n'importe laquelle des revendications 7 à 9.
